# EUROPÄISCHE PATENTANMELDUNG

(11) **EP 4 667 855 A1**
(43) Veröffentlichungstag der Anmeldung: **24.12.2025**
(21) Anmeldenummer: 24182713.8
(22) Anmeldetag: 17.06.2024
(51) Int. Cl.: F25D 21/02, B64D 15/20, F24F 11/62, F24F 11/65, F25B 39/02, F28G 15/00, G01N 29/44, G06N 3/08, G06N 20/00

(54) **VORRICHTUNG UND VERFAHREN ZUR ERKENNUNG VON EISBILDUNG AN EINEM VERDAMPFER EINER WÄRMEPUMPE**

(71) Anmelder: Viessmann Holding International GmbH, 35108 Allendorf (Eder) (DE)
(72) Erfinder: Paulick, Sven, 01454 Radeberg (DE)
(74) Vertreter: RPK Patentanwälte Reinhardt und Kaufmann Partnerschaft mbB

(57) **Zusammenfassung**

Die Erfindung betrifft eine Vorrichtung (100) zur Erkennung von Eisbildung an einem Verdampfer (10) einer Wärmepumpe (200). Der Verdampfer (10) ist als Wärmeübertrager mit einer Rohrleitung (12) und einer Mehrzahl von Lamellen (14) ausgebildet, welche im bestimmungsgemäßen Betrieb mit einer Luftströmung (18) beaufschlagt sind, welche durch Freiräume zwischen den Lamellen (14) geführt ist. Wenigstens ein Schwingungssensor (16) ist an einer Lamelle (14) angeordnet, und bestimmt eine Eigenfrequenz (30) der Lamelle (14).

Zudem betrifft die Erfindung ein Verfahren zur Erkennung von Eisbildung an einem Verdampfer (10) einer Wärmepumpe (200) und eine Verwendung einer solchen Vorrichtung (100) zur Erkennung von Eisbildung an einem Verdampfer (10) einer Wärmepumpe (200).

## Beschreibung

### Stand der Technik

Die Erfindung betrifft eine Vorrichtung und ein Verfahren zur Erkennung von Eisbildung an einem Verdampfer einer Wärmepumpe sowie eine Verwendung einer solchen Vorrichtung.

Eisbildung an einer Verdampferoberfläche der Außeneinheiten von Luft-Wasser-Wärmepumpen beeinträchtigt signifikant den Wärmeübergang von der Luft an das Kältemittel und senkt gleichzeitig die Effizienz der Wärmeübertragung und somit der gesamten Anlage.

In der EP 4 012 314 A1 wird beispielsweise eine Vorrichtung sowie ein Verfahren zur Erkennung eines kritischen Belags, insbesondere durch Verschmutzung und/oder Eisbildung, auf einer luftbeaufschlagten Wärmeübertragerfläche beschrieben. Dabei wird neben der Auswertung eines mit der Leistungsaufnahme eines Ventilators korrelierten Parameters ergänzend ein Vibrations-Parameter ausgewertet. Mit zunehmender Belagbildung ändert sich das Schwingungsverhalten des Verdampfer-Systems, speziell der Verdampfereinheit gebildet aus Ventilator und Verdampfer. Insofern wird der Verlauf eines Vibrations-Parameters speziell der Bauteile, die von dem Luftstrom beaufschlagt sind, als Indikator für den Grad der Belagbildung herangezogen.

Die DE 20 2006 020 207 U1 offenbart weiter das Detektieren bzw. Überwachen der Bildung einer Eis- oder Reifschicht an einem Kälte abgebenden Element, insbesondere einem Verdampfer, beispielsweise eines Kältegeräts, mittels eines optischen, elektrischen, temperaturabhängigen Sensors. Bei Bildung einer Eisschicht, zumindest ab einer vorbestimmten Dicke der Schicht, wird ein Abtauprozess wie beispielsweise Unterbrechung des Kühlbetriebes und/oder Einschalten einer Abtauheizung mittels einer entsprechenden Steuervorrichtung gestartet.

### Offenbarung der Erfindung

Die Aufgabe der Erfindung ist es, eine verbesserte Vorrichtung zur Erkennung von Eisbildung an einem Verdampfer einer Wärmepumpe zu schaffen.

Eine weitere Aufgabe der Erfindung ist es, ein Verfahren zur Erkennung von Eisbildung an einem Verdampfer einer Wärmepumpe mit einer solchen verbesserten Vorrichtung anzugeben.

Eine weitere Aufgabe der Erfindung ist es, eine Verwendung einer solchen verbesserten Vorrichtung anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Nach einem Aspekt der Erfindung wird eine Vorrichtung zur Erkennung von Eisbildung an einem Verdampfer einer Wärmepumpe vorgeschlagen, wobei der Verdampfer als Wärmeübertrager mit einer Rohrleitung und einer Mehrzahl von Lamellen ausgebildet ist, welche im bestimmungsgemäßen Betrieb mit einer Luftströmung beaufschlagt sind, welche durch Freiräume zwischen den Lamellen geführt ist. Dabei ist wenigstens ein Schwingungssensor an einer Lamelle angeordnet, welcher eine Eigenfrequenz der Lamelle bestimmt.

Ein Kühlmittel strömt durch die Rohrleitung und steht im Wärmeübergang mit der Luftströmung.

Die vorgeschlagene Vorrichtung ermöglicht eine Bestimmung einer Eigenfrequenz an einer oder mehreren Lamellen des Verdampfers mittels Schwingungssensoren. Vorteilhaft können ein oder mehrere Schwingungssensoren bzw. Beschleunigungssensoren direkt an den Lamellen des Verdampfers angebracht werden.

Da die Lamelle konstruktiv mit einem Verdampferrohr des Verdampfers verbunden ist, hängt die Eigenfrequenz zwar auch vom Verdampfer ab. Allerdings kann mit der Messung an der Lamelle die Eisbildung besser detektiert werden, da die Lamelle eine geringere Steifigkeit und ein geringeres Gewicht im Vergleich zum Eis selbst hat. Eine Frequenzverschiebung der Schwingungen der einzelnen Lamellen ist daher viel größer als die des gesamten Verdampfers. Grund ist die relativ betrachtet weitaus größere Änderung des Gewichtes der Lamelle durch die Eisbildung.

Die vorgeschlagene Vorrichtung ermöglicht somit eine höhere Empfindlichkeit hinsichtlich der Eisbildung als im Stand der Technik, bei dem die Eigenfrequenz eines Verdampfers selbst gemessen und bewertet wird.

Jedes mechanische Bauteil hat eine charakteristische Eigenfrequenz, mit der es nach einer mechanischen Anregung schwingt. Veränderungen am Bauteil, welche die Steifigkeit beeinflussen, führen zu einer Änderung der Eigenfrequenz. Eine schrittweise Eis- bzw. Reifbildung auf einem Bauteil führt zu einer Gewichtsänderung und somit zu einer Änderung der Eigenfrequenz des Bauteils. Dieses Phänomen kann genutzt werden, um frühzeitig Eis- bzw. Reifbildung auf den Verdampfern der Außeneinheiten von Luft-Wasser-Wärmepumpen zu detektieren, um so eine bedarfsgerechte Abtauung zu initiieren. Im gleichen Maße kann die vollständige Abtauung detektiert werden, um den Abtauzyklus zu verkürzen.

Durch eine frühzeitige und genaue Detektion von Eisbildung an der Oberfläche von Lamellen des Verdampfers lässt sich eine bedarfsgerechte Abtauung des Verdampfers ermöglichen bzw. effizienter steuern. Ebenso kann das Ende des Abtauvorgangs besser detektiert werden, womit der Einsatz von Nutzwärme reduziert werden kann. Der Einsatz zusätzlicher Energie zur Abtauung kann reduziert werden.

Die vorgeschlagene Vorrichtung ist unempfindlich gegenüber Störfaktoren wie Laub oder andere Verschmutzungen wie Staubpartikel, da beispielsweise Laub zu keiner signifikanten Gewichtsänderung und somit zu keiner Eigenfrequenzänderung bei der Schwingungsanalyse führt.

Nach einer günstigen Ausgestaltung der Vorrichtung kann der wenigstens eine Schwingungssensor mit der Lamelle fest verbunden sein. Insbesondere kann dabei der wenigstens eine Schwingungssensor mit der Lamelle verklebt sein. Alternativ oder zusätzlich kann der wenigstens eine Schwingungssensor in einer mit der Lamelle verschweißten Halterung angeordnet sein. Bevorzugt kann der wenigstens eine Schwingungssensor direkt auf der Oberfläche der Lamelle angebracht sein, beispielsweise mit einem Zwei-Komponenten-Klebstoff angeklebt sein. Auf diese Weise kann ein Schwingungsverhalten der Lamelle zuverlässig bestimmt werden. Die robuste Anbringung des Schwingungssensors ermöglicht eine hohe Lebensdauer der Vorrichtung.

Nach einer günstigen Ausgestaltung der Vorrichtung kann der wenigstens eine Schwingungssensor an einer Stelle des Verdampfers mit hoher Vereisungswahrscheinlichkeit angeordnet sein. Insbesondere können dies Bereiche sein, bei denen im Betrieb eine Vereisung zu erwarten ist. Dies können vorteilhaft Bereiche mit höherem Luftvolumenstrom sowie Bereiche der geringsten Temperatur der durchströmenden Luft sein, wie beispielsweise im luftstromabwärtigen Bereich des Verdampfers. Auf diese Weise kann sichergestellt werden, dass frühzeitig die Eisbildung erkannt wird und Gegenmaßnahmen wie eine Abtauung eingeleitet werden können. So können sich die Lamellen über die gesamte Tiefe des Verdampfers erstrecken und bestimmte Bereiche aufweisen, die stärker oder schwächer vereisen. Alternativ kann es auch bestimmte Lamellen geben, die luftstromabwärts angeordnet sind und daher stärker dem Einfluss von Kälte und Feuchte ausgesetzt sind als in anderen Bereichen und somit stärker vereisen können.

Nach einer günstigen Ausgestaltung der Vorrichtung kann der wenigstens eine Schwingungssensor an einem luftstromabwärts befindlichen Ende der wenigstens einen Lamelle angeordnet sein. Das luftstromabwärts befindliche Ende der Lamellen stellt einen Bereich mit einer hohen Vereisungswahrscheinlichkeit dar.

Nach einer günstigen Ausgestaltung der Vorrichtung kann eine Mehrzahl von Schwingungssensoren an einer Mehrzahl von Lamellen angeordnet sein. Auf diese Weise kann die Verdampferoberfläche möglichst großflächig abgedeckt werden. Damit steigt die Wahrscheinlichkeit, dass die Eisbildung frühzeitig erkannt wird.

Nach einer günstigen Ausgestaltung der Vorrichtung kann die Mehrzahl von Schwingungssensoren über eine Querschnittsfläche des Verdampfers verteilt sein. Insbesondere kann dabei die Mehrzahl von Schwingungssensoren über die Querschnittsfläche des Verdampfers gleichmäßig, insbesondere sternförmig, verteilt sein. So ergibt sich eine möglichst großflächige Abdeckung mit Schwingungssensoren über der gesamten Verdampferoberfläche. Damit steigt die Wahrscheinlichkeit, dass die Eisbildung frühzeitig erkannt wird.

Nach einer günstigen Ausgestaltung der Vorrichtung kann der wenigstens eine Schwingungssensor im Strömungsbereich eines Ventilators des Verdampfers angeordnet sein. Dabei kann der Ventilator in Strömungsrichtung im Abströmbereich des Verdampfers oder im Anströmbereich positioniert sein, sodass der Verdampfer auf der Saugseite oder der Druckseite des Ventilators angeordnet ist. Bereiche erhöhter Strömungsgeschwindigkeiten begünstigen die Reifbildung. Außerdem kühlt die feuchte anströmende Luft sich auf dem Weg durch den Verdampfer ab und der Taupunkt wird dabei unterschritten, wodurch eine erste Eisbildung begünstigt wird.

Nach einer günstigen Ausgestaltung kann die Vorrichtung eine Einrichtung zur Auswertung von Messsignalen des wenigstens einen Schwingungssensors mittels einer Methode der Künstlichen Intelligenz umfassen.

Aufgrund materieller und fertigungstechnischer Toleranzen sowie letztendlich örtlicher Gegebenheiten, wie der Montage, kann es zu einer abweichenden Eigenfrequenz kommen. Deshalb kann eine Methode der Künstlichen Intelligenz (KI) von Vorteil sein, die selbstlernend auf Grundlage der empirischen Daten sowie Kriterien die Eisbildung sowie auch eine Abtauung erkennt und zunehmend verbessert.

Nach einem weiteren Aspekt der Erfindung wird ein Verfahren zur Erkennung von Eisbildung an einem Verdampfer einer Wärmepumpe mit einer oben beschriebenen Vorrichtung vorgeschlagen, wobei mittels wenigstens eines Schwingungssensors, welcher an einer Lamelle des Verdampfers angeordnet ist, eine zeitabhängige Änderung einer Eigenfrequenz der Lamelle bestimmt wird.

Dabei werden die Schwingungen der Lamellen des Verdampfers durch das Durchfließen des Kältemittels und das Durchströmen der Luft bewirkt. Je nach Lastzustand der Wärmepumpe ist im Normalbetrieb (ohne Abtauung) eine Eigenfrequenz in einem gewissen Frequenzband zu erwarten. Mit Beginn der Reifbildung bzw. Eisbildung verändert sich die Eigenfrequenz der Lamellen des Verdampfers abweichend von den im Normalbetrieb auftretenden Schwingungen. Die Eisbildung sowie der Grad der Eisbildung können somit detektiert werden. Auf dieselbe Weise kann eine vollständige Abtauung detektiert werden.

Da die Lamelle konstruktiv mit einem Verdampferrohr verbunden ist, ist die Eigenfrequenz zwar auch abhängig vom Verdampfer. Allerdings kann mit der Messung an der Lamelle die Eisbildung besser detektiert werden, da die Lamelle eine geringere Steifigkeit und ein geringeres Gewicht im Vergleich zum Eis selbst hat. Eine Frequenzverschiebung der Schwingungen der einzelnen Lamellen ist daher viel größer als die des gesamten Verdampfers. Grund ist die relativ betrachtet weitaus größere Änderung des Gewichtes der Lamellen durch die Eisbildung.

Das vorgeschlagene Verfahren ermöglicht somit eine höhere Empfindlichkeit hinsichtlich der Eisbildung als im Stand der Technik, bei dem die Eigenfrequenz eines Verdampfers selbst gemessen und bewertet wird.

Das Verfahren ermöglicht es auch, die Abtauung erst ab einer bestimmten Dicke der Eisschicht zu initiieren, um eine frühzeitige Abtauung zu vermeiden bzw. andere Methoden der Abtauung anzuwenden.

Die Analyse des Schwingungsverhaltens einer Lamelle des Verdampfers kann vorteilhaft in die Regelung der Wärmepumpe einfließen. Insbesondere lassen sich günstigerweise Normalbetrieb und beginnende Eisbildung unterscheiden.

Durch eine frühzeitige und genaue Detektion von Eisbildung an der Oberfläche des Verdampfers lässt sich eine bedarfsgerechte Abtauung des Verdampfers ermöglichen bzw. effizienter steuern. Ebenso kann das Ende des Abtauvorgangs besser detektiert werden, womit der Einsatz von Nutzwärme reduziert werden kann. Der Einsatz zusätzlicher Energie zur Abtauung kann reduziert werden.

Das vorgeschlagene Verfahren ist unempfindlich gegenüber Störfaktoren wie Laub oder andere Verschmutzungen, da beispielsweise Laub zu keiner signifikanten Gewichtsänderung und somit zu keiner Eigenfrequenzänderung bei der Schwingungsanalyse führt.

Nach einer günstigen Ausgestaltung des Verfahrens kann ein Frequenzband der Eigenfrequenz in einem Normalbetrieb der Wärmepumpe, insbesondere auf einem Prüfstand, ermittelt werden. Die empirische Ermittlung des Frequenzbandes kann so als Basis eines jeden Seriengeräts dienen. Das Verhalten des Verdampfers, welches für jeden Wärmepumpen-Typ unterschiedlich sein kann, kann vorteilhaft jeweils getestet werden. Auf diese Weise können produktspezifische Frequenzbänder ermittelt werden. Auf dem Prüfstand können Änderungen des Verdampfers separat getestet werden, sodass für jedes Seriengerät die entsprechenden Daten vorliegen und ein initiales Frequenzband vorgegeben werden kann.

Nach einer günstigen Ausgestaltung des Verfahrens kann das Frequenzband der Eigenfrequenz bei einer Inbetriebnahme an einem bestimmungsgemäßen Einsatzort der Wärmepumpe oder während eines laufenden Betriebs unter eisfreien Umgebungsbedingungen angepasst werden. Aufgrund materieller und fertigungstechnischer Toleranzen sowie letztendlich örtlicher Gegebenheiten, wie der Montage, kann es zu einer abweichenden Eigenfrequenz kommen, die so berücksichtigt werden kann. Auf diese Weise kann eine stetige Anpassung im laufenden Betrieb der Wärmepumpe vor Ort erfolgen.

Nach einer günstigen Ausgestaltung des Verfahrens kann die Bestimmung der zeitabhängigen Änderung der Eigenfrequenz des Verdampfers mittels einer Methode der Künstlichen Intelligenz durchgeführt werden. Eine Methode der Künstlichen Intelligenz (KI), die selbstlernend auf Grundlage der empirischen Daten und derzeitigen Kriterien die Eisbildung sowie auch eine Abtauung erkennt und zunehmend verbessert, kann bei der Bestimmung der zeitabhängigen Änderung der Eigenfrequenz von Vorteil sein.

Nach einer günstigen Ausgestaltung des Verfahrens kann die zeitabhängige Änderung der Eigenfrequenz an einer Stelle des Verdampfers mit hoher Vereisungswahrscheinlichkeit bestimmt werden.

Dies können vorteilhaft Bereiche mit höherem Luftvolumenstrom sowie Bereiche der geringsten Temperatur der durchströmenden Luft sein, wie beispielsweise im luftstromabwärtigen Bereich des Verdampfers. Auf diese Weise kann sichergestellt werden, dass frühzeitig die Eisbildung erkannt wird und Gegenmaßnahmen wie eine Abtauung eingeleitet werden können. So können sich alle Lamellen über die gesamte Tiefe des Verdampfers erstrecken und bestimmte Bereiche aufweisen, die stärker oder schwächer vereisen. Alternativ kann es dagegen bestimmte Lamellen geben, die luftstromabwärts angeordnet sind und daher stärker dem Einfluss von Kälte und Feuchte ausgesetzt sind als in anderen Bereichen und somit stärker vereisen können.

Nach einer günstigen Ausgestaltung des Verfahrens kann die zeitabhängige Änderung der Eigenfrequenz an einem luftstromabwärts befindlichen Bereich, insbesondere Ende, des Verdampfers bestimmt werden. Das luftstromabwärts befindliche Ende der Lamellen stellt einen Bereich mit einer hohen Vereisungswahrscheinlichkeit dar.

Nach einer günstigen Ausgestaltung des Verfahrens kann die zeitabhängige Änderung der Eigenfrequenz über eine Querschnittsfläche des Verdampfers verteilt bestimmt werden. Insbesondere kann dabei die zeitabhängige Änderung der Eigenfrequenz über die Querschnittsfläche des Verdampfers gleichmäßig, insbesondere sternförmig, verteilt bestimmt werden. So ergibt sich eine möglichst großflächige Abdeckung über der gesamten Verdampferoberfläche. Damit steigt die Wahrscheinlichkeit, dass die Eisbildung frühzeitig erkannt wird.

Nach einer günstigen Ausgestaltung des Verfahrens kann die zeitabhängige Änderung der Eigenfrequenz im Strömungsbereich eines Ventilators des Verdampfers bestimmt werden. Dabei kann der Ventilator in Strömungsrichtung im Abströmbereich des Verdampfers oder im Anströmbereich positioniert sein, sodass der Verdampfer auf der Saugseite oder der Druckseite des Ventilators angeordnet ist. Bereiche erhöhter Strömungsgeschwindigkeit begünstigen die Bildung von Reif und Eis. Außerdem kühlt die feuchte anströmende Luft sich auf dem Weg durch den Verdampfer ab und der Taupunkt wird dabei unterschritten, wodurch eine erste Eisbildung begünstigt wird.

Nach einem weiteren Aspekt der Erfindung wird eine Verwendung einer oben beschriebenen Vorrichtung zur Erkennung von Eisbildung an einem Verdampfer einer Wärmepumpe mit einem solchen Verfahren vorgeschlagen zum Betreiben der Wärmepumpe, wobei mittels einer zeitabhängigen Änderung einer Eigenfrequenz einer Lamelle des Verdampfers eine Abtauung des Verdampfers der Wärmepumpe detektiert und/oder geregelt wird.

Vorteilhaft kann die Abtauung erst ab einer bestimmten Dicke der Eisschicht initiiert werden, um eine frühzeitige Abtauung zu vermeiden bzw. andere Methoden der Abtauung anzuwenden.

Die Analyse des Schwingungsverhaltens einer Lamelle des Verdampfers kann vorteilhaft in die Regelung der Wärmepumpe einfließen. Insbesondere lassen sich günstigerweise Normalbetrieb und beginnende Eisbildung unterscheiden.

Durch eine frühzeitige und genaue Detektion von Eisbildung an der Oberfläche des Verdampfers lässt sich eine bedarfsgerechte Abtauung des Verdampfers ermöglichen bzw. effizienter steuern. Ebenso kann das Ende des Abtauvorgangs besser detektiert werden, womit der Einsatz von Nutzwärme reduziert werden kann. Der Einsatz zusätzlicher Energie zur Abtauung kann reduziert werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine Draufsicht auf eine Außeneinheit einer Wärmepumpe mit einer Vorrichtung zur Erkennung von Eisbildung an einem Verdampfer der Wärmepumpe nach einem Ausführungsbeispiel der Erfindung;
- Fig. 2: eine Draufsicht auf den Verdampfer der Wärmepumpe mit angebrachten Schwingungssensoren;
- Fig. 3: eine Seitenansicht des Verdampfers mit angebrachten Schwingungssensoren nach Fig. 2; und
- Fig. 4: einen zeitlichen Verlauf einer Eigenfrequenzmessung einer Lamelle eines Verdampfers einer Wärmepumpe zur Erkennung von Eisbildung und vollständiger Abtauung an dem Verdampfer nach dem erfindungsgemäßen Verfahren.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

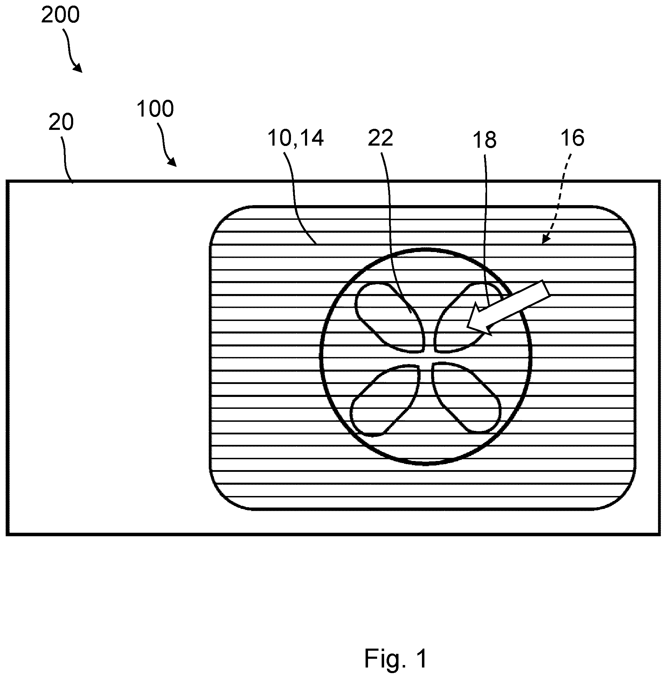

Figur 1 zeigt eine Draufsicht auf eine Außeneinheit 20 einer Wärmepumpe 200 mit einer Vorrichtung 100 zur Erkennung von Eisbildung an einem Verdampfer 10 der Wärmepumpe 200 nach einem Ausführungsbeispiel der Erfindung.

Der Verdampfer 10 befindet sich im Gehäuse der Außeneinheit 20 der Luft-Wasser-Wärmepumpe 200. Der Verdampfer 10 ist ein Rohrwärmeübertrager mitaufgeprägten Rippen/Lamellen 14 zur Erhöhung der Wärmeübertragungsfläche. Durch das Anbringen von Schwingungssensoren 16 an Lamellenoberflächen werden Schwingungen im Betrieb der Wärmepumpe gemessen.

Die Schwingungssensoren 16 sind dabei an signifikanten Stellen des Verdampfers 10 mit höherer Wahrscheinlichkeit der Vereisung angeordnet, beispielsweise in Bereichen mit höherem Luftvolumenstrom sowie in Bereichen der geringsten Temperatur der durchströmenden Luft wie beispielsweise im luftstromabwärtigen Bereich des Verdampfers 10.

Lamellen 14 können sich über die gesamte Tiefe des Verdampfers 10 erstrecken und bestimmte Bereiche aufweisen, die stärker oder schwächer vereisen. Alternativ kann es dagegen bestimmte Lamellen 14 geben, die luftstromabwärts angeordnet sind und daher stärker dem Einfluss von Kälte und Feuchte ausgesetzt sind als in anderen Bereichen und somit stärker vereisen können.

Übliche Schwingungssensoren 16 sind sehr klein und können so angebracht werden, dass es keinen negativen Einfluss auf den Wärmeübergang hat. Schwingungssensoren 16 können so günstigerweise ohne bauliche Änderungen in den Lamellenzwischenräumen platziert werden.

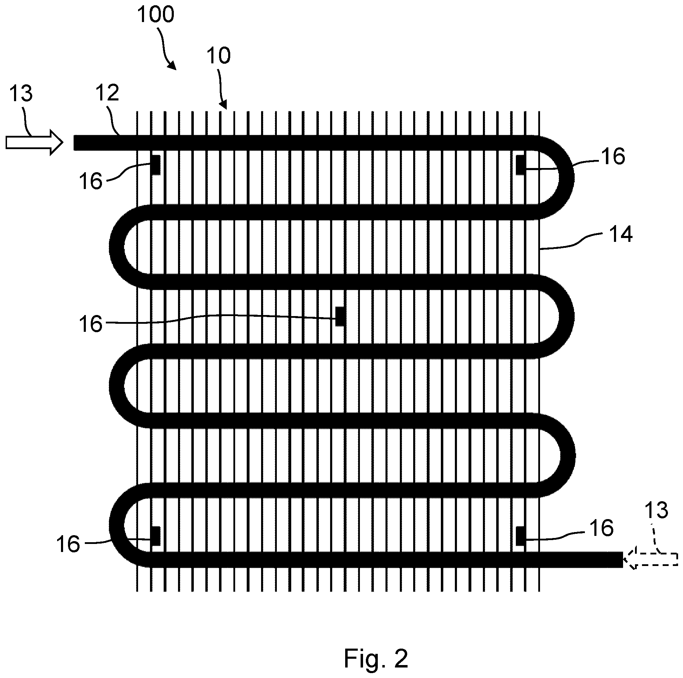

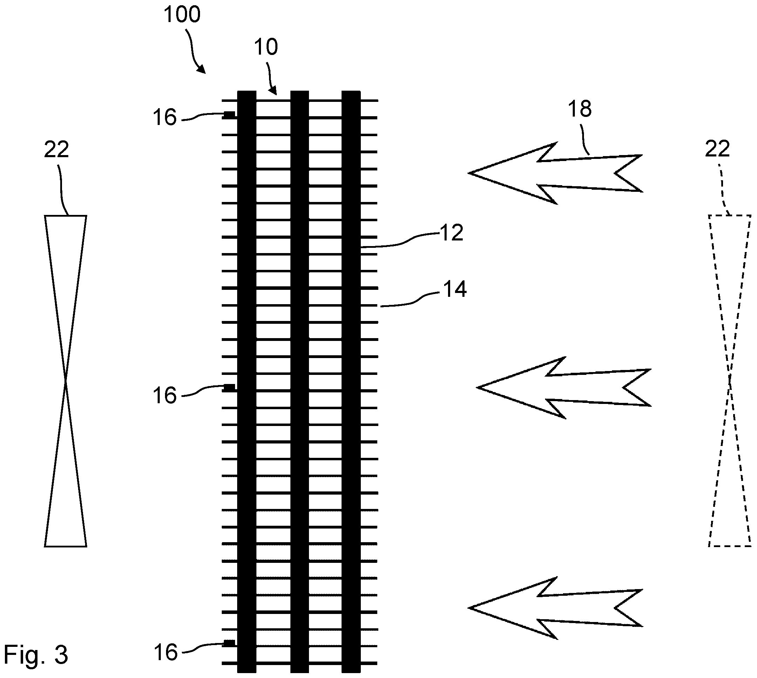

Der Verdampfer 10, welcher in Figur 2 in einer Draufsicht und in Figur 3 in einer Seitenansicht detailliert dargestellt ist, ist als Wärmeübertrager mit einer Rohrleitung 12 und einer Mehrzahl von Lamellen 14 ausgebildet, welche im bestimmungsgemäßen Betrieb mit einer Luftströmung 18 beaufschlagt sind, welche quer zu den Lamellen 14 geführt ist. Dazu ist in der Außeneinheit 20 ein Ventilator 22 erkennbar, welcher die Luftströmung 18 erzeugt und durch den Verdampfer 10 führt. Die Durchflussrichtung 13 des Kühlmittels in der Rohrleitung 12 ist dabei in Figur 2 eingezeichnet. Die Durchflussrichtung 13 kann sich im Abtaubetrieb und Kühlbetrieb je nach Kältekreiskonfiguration ändern. Deshalb ist in Figur 2 mit einem Pfeil mit unterbrochenen Linien auch eine umgekehrte Durchflussrichtung 13 dargestellt.

Dabei weist die Vorrichtung 100, wie in den Figuren 2 und 3 erkennbar, mehrere Schwingungssensoren 16 auf, welche an einzelnen Lamellen 14 des Verdampfers 10 angeordnet sind und eine Eigenfrequenz 30 der Lamellen 14 bestimmen.

Die Schwingungssensoren 16 sind mit den Lamellen 14 fest verbunden. Insbesondere können die Schwingungssensoren 16 mit den Lamellen 14 verklebt sein. Alternativ oder zusätzlich können die Schwingungssensoren 16 auch jeweils in einer mit der Lamelle 14 verschweißten Halterung angeordnet sein. Günstigerweise können die Schwingungssensoren 16 direkt auf der Oberfläche der Lamellen 14 angebracht sein, beispielsweise mit einem Zwei-Komponenten-Klebstoff angeklebt sein.

Vorteilhaft können die Schwingungssensoren 16 an Stellen des Verdampfers 10 mit hoher Vereisungswahrscheinlichkeit angeordnet sein.

Für die Positionierung der Schwingungssensoren 16 sind zwei Aspekte von Relevanz, die Position in der Tiefe des Verdampfers 10, von der mit Luft angeströmten Front aus gesehen, sowie die Geschwindigkeit der Luftströmung. Eine höhere Strömungsgeschwindigkeit begünstigt die Reifbildung.

Das bedeutet, dass die Schwingungssensoren 16 von der Front des Verdampfers 10 aus gesehen luftstromabwärts möglichst von hinten am Verdampfer 10 positioniert sein sollten. Hintergrund ist, dass die feuchte anströmende Luft sich auf dem Weg durch den Verdampfer 10 abkühlt und der Taupunkt dabei unterschritten wird, wodurch eine erste Eisbildung begünstigt wird.

Wie in Figur 2 erkennbar ist, können die Schwingungssensoren 16 günstigerweise über eine Querschnittsfläche des Verdampfers 10 verteilt sein. Insbesondere können die Schwingungssensoren 16 dabei über die Querschnittsfläche des Verdampfers 10 gleichmäßig, insbesondere sternförmig, verteilt sein.

Dabei können, wie in Figur 3 erkennbar ist, die Schwingungssensoren 16 an einem luftstromabwärts befindlichen Ende der Lamellen 14, beispielsweise auf der Saugseite des Ventilators 22 des Verdampfers 10, angeordnet sein, da der kälteste Bereich des Verdampfers 10, an dem die Eisbildung zuerst einsetzt, ein luftstromabwärts liegender Bereich ist.

Alternativ ist in Figur 3 ein weiterer Ventilator 22 auf der Anströmseite des Verdampfers 10 mit unterbrochenen Linien eingezeichnet, bei dem der Verdampfer 10 auf der Druckseite des Ventilators 22 angeordnet ist. Eine solche Anordnung erzeugt einen Luftstrom 18 in gleicher Richtung.

Bei der sternförmigen Anordnung ist der Hintergrund eine möglichst großflächige Abdeckung über der gesamten Verdampferoberfläche. Hinsichtlich der Strömungsgeschwindigkeit ist es von Relevanz, einen Schwingungssensor 16 zentral im Bereich einer direkten Anströmung durch den Ventilator 22 anzuordnen, da hier bei symmetrisch angeordneten Ventilator 22 von einer erhöhten Strömungsgeschwindigkeit ausgegangen werden kann.

Somit könnte günstigerweise die Sensorik auch auf ein bis zwei Schwingungssensoren 16 in zentraler Lage bezogen auf den Querschnitt reduziert werden.

Vorteilhaft kann die Vorrichtung 100 so zur Erkennung von Eisbildung an einem Verdampfer 10 einer Wärmepumpe 200 mit dem erfindungsgemäßen Verfahren zum Betreiben der Wärmepumpe 200 verwendet werden. Dabei kann günstigerweise mittels einer zeitabhängigen Änderung der Eigenfrequenz 30 des Verdampfers 10 eine Abtauung des Verdampfers 10 der Wärmepumpe 200 detektiert und/oder geregelt werden.

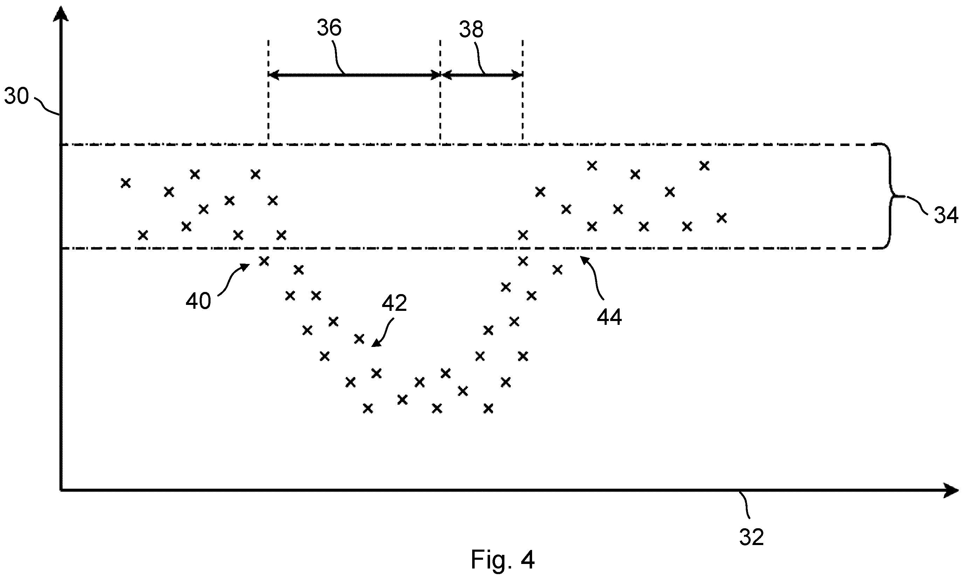

In Figur 4 ist ein zeitlicher Verlauf einer Eigenfrequenzmessung einer Lamelle 14 eines Verdampfers 10 einer Wärmepumpe 200 zur Erkennung von Eisbildung und vollständiger Abtauung an dem Verdampfer 10 nach dem erfindungsgemäßen Verfahren dargestellt. Dabei sind einzelne Messpunkte der bestimmten Eigenfrequenzen 30 als Funktion der Zeit 32 dargestellt.

Gemäß dem erfindungsgemäßen Verfahren wird zur Erkennung von Eisbildung an dem Verdampfer 10 der Wärmepumpe 200 mittels wenigstens eines Schwingungssensors 16, welcher an einer Lamelle 14 des Verdampfers 10 angeordnet ist, eine zeitabhängige Änderung einer Eigenfrequenz 30 des Verdampfers 10 bestimmt.

Dabei wird ein Frequenzband 34 der Eigenfrequenz 30 in einem Normalbetrieb der Wärmepumpe 200, insbesondere auf einem Prüfstand, ermittelt. Dies beinhaltet ebenfalls ein lastabhängiges Frequenzband 34, da die Schwingungen auf der Verdampferoberfläche je nach Lastfall variieren. Das Frequenzband 34 der Eigenfrequenz 30 kann dabei günstigerweise bei einer Inbetriebnahme an einem bestimmungsgemäßen Einsatzort der Wärmepumpe oder während eines laufenden Betriebs unter eisfreien Umgebungsbedingungen angepasst werden. Auf diese Weise kann eine stetige Anpassung im laufenden Betrieb der Wärmepumpe vor Ort erfolgen.

Das in Figur 4 dargestellte Frequenzband 34 der Eigenfreguenzbestimmung der Lamelle 14 verläuft im Normalbetrieb der Wärmepumpe 200 weitestgehend konstant. In einem Bereich 36 einer Eisbildung sinkt die Eigenfrequenz 30 aufgrund der höheren Masse der Lamellen 14 des Verdampfers 10, was am Beginn 40 der Eisbildung detektiert werden kann. Im Bereich 42, bei einer maximalen Absenkung der Eigenfrequenz 30, kann der Grad der Eisbildung bestimmt werden.

Wenn Maßnahmen zur Abtauung eingeleitet werden, findet im Bereich 38 eine Abtauung statt, welche im Bereich 44 dann abgeschlossen ist, wo die Eigenfrequenzen 30 wieder im ursprünglichen Frequenzband 34 liegen.

Die zeitabhängige Änderung der Eigenfrequenz 30 wird zweckmäßigerweise dabei an einer Stelle des Verdampfers 10 mit hoher Vereisungswahrscheinlichkeit bestimmt. Dies kann beispielsweise an einem luftstromabwärts befindlichen Bereich, insbesondere Ende, des Verdampfers 10 sein.

Vorteilhaft ist auch, wenn die zeitabhängige Änderung der Eigenfrequenz 30 über eine Querschnittsfläche des Verdampfers 10 verteilt bestimmt wird, insbesondere über die Querschnittsfläche des Verdampfers 10 gleichmäßig, insbesondere sternförmig, verteilt bestimmt wird.

Günstigerweise kann die zeitabhängige Änderung der Eigenfrequenz 30 im Strömungsbereich des Ventilators 22 des Verdampfers 10 bestimmt werden, da der kälteste Bereich des Verdampfers 10, an dem die Eisbildung zuerst einsetzt, ein luftstromabwärts liegender Bereich ist und so hier zuerst Änderungen der Eigenfrequenz der Lamellen 14 deutlich werden.

Aufgrund materieller und fertigungstechnischer Toleranzen sowie letztendlich örtlicher Gegebenheiten, wie der Montage, kann es zu einer abweichenden Eigenfrequenz 30 kommen. Deshalb kann vorteilhaft eine Methode der Künstlichen Intelligenz (KI) eingesetzt werden, die selbstlernend auf Grundlage der empirischen Daten und derzeitigen Kriterien die Eisbildung sowie auch eine Abtauung im realen Betrieb erkennt und zunehmend verbessert.

Die Vorrichtung 100 kann dazu eine, nicht dargestellte, Einrichtung zur Auswertung von Messsignalen der Schwingungssensoren 16, insbesondere mittels einer Methode der Künstlichen Intelligenz, aufweisen.

Die Detektion der Eisbildung am Verdampfer 10 einer Wärmepumpe 200 kann vorteilhaft der eigentlichen Abtauregelung als Unterstützung zur genaueren Vorhersage notwendiger Abtauungen dienen. Weitere Parameter, wie Kältekreisparameter oder Ventilatordrehzahl/Ventilatorleistung können günstigerweise berücksichtigt werden.

Im gleichen Maße wie bei der Reifbildung bzw. Eisbildung kann auch die vollständige Abtauung detektiert werden aufgrund wiederum veränderter Eigenfrequenzen des Verdampfers 10.

### Bezugszeichen

- 10: Verdampfer
- 12: Rohrleitung
- 13: Durchflussrichtung Kühlmittel
- 14: Lamelle
- 16: Schwingungssensor
- 18: Luftströmung
- 20: Außeneinheit
- 22: Ventilator
- 30: Eigenfrequenz
- 32: Zeit
- 34: Frequenzband
- 36: Eisbildung
- 38: Abtauung
- 40: Detektion Beginn Eisbildung
- 42: Detektion Grad der Eisbildung
- 44: Detektion vollständige Abtauung
- 100: Vorrichtung
- 200: Wärmepumpe

## Patentansprüche

1. Vorrichtung (100) zur Erkennung von Eisbildung an einem Verdampfer (10) einer Wärmepumpe (200), wobei der Verdampfer (10) als Wärmeübertrager mit einer Rohrleitung (12) und einer Mehrzahl von Lamellen (14) ausgebildet ist, welche im bestimmungsgemäßen Betrieb mit einer Luftströmung (18) beaufschlagt sind, welche durch Freiräume zwischen den Lamellen (14) geführt ist,
wobei wenigstens ein Schwingungssensor (16) an einer Lamelle (14) angeordnet ist, welcher eine Eigenfrequenz (30) der Lamelle (14) bestimmt.

2. Vorrichtung nach Anspruch 1, wobei der wenigstens eine Schwingungssensor (16) mit der Lamelle (14) fest verbunden ist,
insbesondere wobei der wenigstens eine Schwingungssensor (16) mit der Lamelle (14) verklebt ist und/oder wobei der wenigstens eine Schwingungssensor (16) in einer mit der Lamelle (14) verschweißten Halterung angeordnet ist.

3. Vorrichtung nach Anspruch 1 oder 2, wobei der wenigstens eine Schwingungssensor (16) an einer Stelle des Verdampfers (10) mit hoher Vereisungswahrscheinlichkeit angeordnet ist.

4. Vorrichtung nach einem der vorhergehenden Ansprüche, wobei der wenigstens eine Schwingungssensor (16) an einem luftstromabwärts befindlichen Ende der wenigstens einen Lamelle (14) angeordnet ist.

5. Vorrichtung nach einem der vorhergehenden Ansprüche, wobei eine Mehrzahl von Schwingungssensoren (16) an einer Mehrzahl von Lamellen (14) angeordnet ist.

6. Vorrichtung nach Anspruch 5, wobei die Mehrzahl von Schwingungssensoren (16) über eine Querschnittsfläche des Verdampfers (10) verteilt ist,
insbesondere wobei die Mehrzahl von Schwingungssensoren (16) über die Querschnittsfläche des Verdampfers (10) gleichmäßig, insbesondere sternförmig, verteilt ist.

7. Vorrichtung nach einem der vorhergehenden Ansprüche, wobei der wenigstens eine Schwingungssensor (16) im Strömungsbereich eines Ventilators (22) des Verdampfers (10) angeordnet ist.

8. Vorrichtung nach einem der vorhergehenden Ansprüche, umfassend eine Einrichtung zur Auswertung von Messsignalen des wenigstens einen Schwingungssensors (16) mittels einer Methode der Künstlichen Intelligenz.

9. Verfahren zur Erkennung von Eisbildung an einem Verdampfer (10) einer Wärmepumpe (200) mit einer Vorrichtung (100) nach einem der vorhergehenden Ansprüche, wobei mittels wenigstens eines Schwingungssensors (16), welcher an einer Lamelle (14) des Verdampfers (10) angeordnet ist, eine zeitabhängige Änderung einer Eigenfrequenz (30) der Lamelle (14) bestimmt wird.

10. Verfahren nach Anspruch 9, wobei ein Frequenzband (34) der Eigenfrequenz (30) in einem Normalbetrieb der Wärmepumpe (200), insbesondere auf einem Prüfstand, ermittelt wird.

11. Verfahren nach Anspruch 10, wobei das Frequenzband (34) der Eigenfrequenz (30) bei einer Inbetriebnahme an einem bestimmungsgemäßen Einsatzort der Wärmepumpe (200) oder während eines laufenden Betriebs unter eisfreien Umgebungsbedingungen angepasst wird.

12. Verfahren nach einem der Ansprüche 9 bis 11, wobei die Bestimmung der zeitabhängigen Änderung der Eigenfrequenz (30) des Verdampfers (10) mittels einer Methode der Künstlichen Intelligenz durchgeführt wird.

13. Verfahren nach einem der Ansprüche 9 bis 12, wobei die zeitabhängige Änderung der Eigenfrequenz (30) an einer Stelle des Verdampfers (10) mit hoher Vereisungswahrscheinlichkeit bestimmt wird.

14. Verfahren nach einem der Ansprüche 9 bis 13, wobei die zeitabhängige Änderung der Eigenfrequenz (30) an einem luftstromabwärts befindlichen Bereich, insbesondere Ende, des Verdampfers (10) bestimmt wird.

15. Verfahren nach einem der Ansprüche 9 bis 14, wobei die zeitabhängige Änderung der Eigenfrequenz (30) über eine Querschnittsfläche des Verdampfers (10) verteilt bestimmt wird,
insbesondere wobei die zeitabhängige Änderung der Eigenfrequenz (30) über die Querschnittsfläche des Verdampfers (10) gleichmäßig, insbesondere sternförmig, verteilt bestimmt wird.

16. Verfahren nach einem der Ansprüche 9 bis 15, wobei die zeitabhängige Änderung der Eigenfrequenz (30) im Strömungsbereich eines Ventilators (22) des Verdampfers (10) bestimmt wird.

17. Verwendung einer Vorrichtung (100) zur Erkennung von Eisbildung an einem Verdampfer (10) einer Wärmepumpe (200) nach einem der Ansprüche 1 bis 8 mit einem Verfahren nach einem der Ansprüche 9 bis 16 zum Betreiben der Wärmepumpe (200), wobei mittels einer zeitabhängigen Änderung einer Eigenfrequenz (30) einer Lamelle (14) des Verdampfers (10) eine Abtauung des Verdampfers (10) der Wärmepumpe (200) detektiert und/oder geregelt wird.

## Geänderte Patentansprüche

### Geänderte Patentansprüche gemäss Regel 137(2) EPÜ.

1. Verdampfer (10) einer Wärmepumpe (200) mit einer Vorrichtung (100) zur Erkennung von Eisbildung an diesem, wobei der Verdampfer (10) als Wärmeübertrager mit einer Rohrleitung (12) und einer Mehrzahl von Lamellen (14) ausgebildet ist, welche im bestimmungsgemäßen Betrieb mit einer Luftströmung (18) beaufschlagt sind, welche durch Freiräume zwischen den Lamellen (14) geführt ist,
wobei wenigstens ein Schwingungssensor (16) an einer Lamelle (14) angeordnet ist, welcher eine Eigenfrequenz (30) der Lamelle (14) bestimmt,
wobei zur Detektion der Eisbildung eine durch Gewichtsänderung hervorgerufene Änderung der Eigenfrequenz der Lamelle (14) detektiert wird.

2. Verdampfer nach Anspruch 1, wobei der wenigstens eine Schwingungssensor (16) mit der Lamelle (14) fest verbunden ist,
insbesondere wobei der wenigstens eine Schwingungssensor (16) mit der Lamelle (14) verklebt ist und/oder wobei der wenigstens eine Schwingungssensor (16) in einer mit der Lamelle (14) verschweißten Halterung angeordnet ist.

3. Verdampfer nach Anspruch 1 oder 2, wobei der wenigstens eine Schwingungssensor (16) an einer Stelle des Verdampfers (10) mit hoher Vereisungswahrscheinlichkeit angeordnet ist.

4. Verdampfer nach einem der vorhergehenden Ansprüche, wobei der wenigstens eine Schwingungssensor (16) an einem luftstromabwärts befindlichen Ende der wenigstens einen Lamelle (14) angeordnet ist.

5. Verdampfer nach einem der vorhergehenden Ansprüche, wobei eine Mehrzahl von Schwingungssensoren (16) an einer Mehrzahl von Lamellen (14) angeordnet ist.

6. Verdampfer nach Anspruch 5, wobei die Mehrzahl von Schwingungssensoren (16) über eine Querschnittsfläche des Verdampfers (10) verteilt ist,
insbesondere wobei die Mehrzahl von Schwingungssensoren (16) über die Querschnittsfläche des Verdampfers (10) gleichmäßig, insbesondere sternförmig, verteilt ist.

7. Verdampfer nach einem der vorhergehenden Ansprüche, wobei der wenigstens eine Schwingungssensor (16) im Strömungsbereich eines Ventilators (22) des Verdampfers (10) angeordnet ist.

8. Verdampfer nach einem der vorhergehenden Ansprüche, umfassend eine Einrichtung zur Auswertung von Messsignalen des wenigstens einen Schwingungssensors (16) mittels einer Methode der Künstlichen Intelligenz.

9. Verfahren zur Erkennung von Eisbildung an einem Verdampfer (10) nach einem der vorhergehenden Ansprüche, wobei mittels wenigstens eines Schwingungssensors (16), welcher an einer Lamelle (14) des Verdampfers (10) angeordnet ist, eine zeitabhängige Änderung einer Eigenfrequenz (30) der Lamelle (14) bestimmt wird
wobei zur Detektion der Eisbildung eine durch Gewichtsänderung hervorgerufene Änderung der Eigenfrequenz der Lamelle (14) detektiert wird.

10. Verfahren nach Anspruch 9, wobei ein Frequenzband (34) der Eigenfrequenz (30) in einem Normalbetrieb der Wärmepumpe (200), insbesondere auf einem Prüfstand, ermittelt wird.

11. Verfahren nach Anspruch 10, wobei das Frequenzband (34) der Eigenfrequenz (30) bei einer Inbetriebnahme an einem bestimmungsgemäßen Einsatzort der Wärmepumpe (200) oder während eines laufenden Betriebs unter eisfreien Umgebungsbedingungen angepasst wird.

12. Verfahren nach einem der Ansprüche 9 bis 11, wobei die Bestimmung der zeitabhängigen Änderung der Eigenfrequenz (30) des Verdampfers (10) mittels einer Methode der Künstlichen Intelligenz durchgeführt wird.

13. Verfahren nach einem der Ansprüche 9 bis 12, wobei die zeitabhängige Änderung der Eigenfrequenz (30) an einer Stelle des Verdampfers (10) mit hoher Vereisungswahrscheinlichkeit bestimmt wird.

14. Verfahren nach einem der Ansprüche 9 bis 13, wobei die zeitabhängige Änderung der Eigenfrequenz (30) an einem luftstromabwärts befindlichen Bereich, insbesondere Ende, des Verdampfers (10) bestimmt wird.

15. Verfahren nach einem der Ansprüche 9 bis 14, wobei die zeitabhängige Änderung der Eigenfrequenz (30) über eine Querschnittsfläche des Verdampfers (10) verteilt bestimmt wird,
insbesondere wobei die zeitabhängige Änderung der Eigenfrequenz (30) über die Querschnittsfläche des Verdampfers (10) gleichmäßig, insbesondere sternförmig, verteilt bestimmt wird.

16. Verfahren nach einem der Ansprüche 9 bis 15, wobei die zeitabhängige Änderung der Eigenfrequenz (30) im Strömungsbereich eines Ventilators (22) des Verdampfers (10) bestimmt wird.

17. Verwendung eines Verdampfers (10) einer Wärmepumpe (200) mit einer Vorrichtung (100) zur Erkennung von Eisbildung an diesem einem Verdampfer (10) einer Wärmepumpe (200) nach einem der Ansprüche 1 bis 8 mit einem Verfahren zur Erkennung von Eisbildung an einem Verdampfer (10) nach einem der Ansprüche 9 bis 16 , wobei zur Detektion der Eisbildung eine durch Gewichtsänderung hervorgerufene Änderung der Eigenfrequenz einer Lamelle (14) detektiert wird, wobei mittels der zeitabhängigen Änderung der Eigenfrequenz (30) der Lamelle (14) des Verdampfers (10) eine Abtauung des Verdampfers (10) der Wärmepumpe (200) detektiert und/oder geregelt wird.
